# EUROPÄISCHE PATENTSCHRIFT

(11) **EP 0 811 469 B1**
(45) Veröffentlichungstag und Bekanntmachung des Hinweises auf die Patenterteilung: **17.09.2003**
(21) Anmeldenummer: 97109176.4
(22) Anmeldetag: 06.06.1997
(51) Int. Cl.: B62B 5/00, B62D 51/04, B60L 15/00

(54) **Verteiller-bzw. Zustellerwagen**
Distribution or transport trolley
Véhicule de distribution ou de transport

(30) Priorität: 08.06.1996 DE 19623001
(43) Veröffentlichungstag der Anmeldung: 10.12.1997
(60) Teilanmeldung: 01128568.1
(73) Patentinhaber: EXPRESSO DEUTSCHLAND TRANSPORTGERÄTE GmbH, D-34123 Kassel (DE)
(72) Erfinder: Kratzenberg, Wolfgang, 34270 Schauenburg (DE); Stein, Siegfried, 34246 Vellmar (DE)
(74) Vertreter: Schön, Theodor, Patent- und Zivilingenieur

(56) Entgegenhaltungen:
- EP-A- 0 694 432
- WO-A-95/03096

## Beschreibung

Die Erfindung bezieht sich auf einen Verteiler-bzw. Zustellerwagen, bestehend aus einem aus Rahmenholmen und Quertraversen gebildeten und über wenigstens eine um eine vertikale Achse schwenkbare Lenkrolle und zwei Bockrollen gegen den Boden abgestützten Wagenchassis und einem an dieses angeschlossenen aufragenden Griffbügel, wobei jeder der beiden Rollen eines Rollenpaares (Bock-oder Lenkrollen) ein getriebelos integrierter, unter Last anlau-fender, drehrichtungsumkehrbarer Elektromotor zugeordnet ist und wobei die Energieversorgung der Elektromotoren durch eine Steuereinrichtung beherrscht ist, welche wenigstens einen die auf den Wagen ausgeübte Zug-oder Schubkraft bzw. Lenkkraft erkennenden und in ein Steuersignal umsetzenden Kraftmesser, eine Steuer-und Regeleinrichtung zur Energieversorgung der Elektromotoren im Verhältnis zu der jeweils auf den Wagen ausgeübten Schub-oder Zugkraft sowie einen Schalter zur Stillegung der Hilfskrafteinrichtung des Wagens umfaßt.

Um die Zustellung bzw. Verteilung größerer Mengen an eine Vielzahl von Empfängern zuzustellender bzw. zu verteilender Materialien oder Mitteilungen und dergl. bei geringstmöglicher körperlicher Belastung der Zustell- oder Verteilerperson zu bewerkstelligen ist in der DE-OS 195 05 309 der eingangs beschriebene, motorgetriebene Verteiler-bzw. Zustellerwagen vorgeschlagen worden. Ein dieserart ausgestatteter Zustell-bzw. Verteilerwagen entlastet den Verteiler von dem für das Bewegen des Wagens erforderlichen Kraftaufwand, wobei die in Abhängigkeit von der am Griffbügel angreifenden Zug-bzw. Schubkraft geregelte Energieversorgung des Antriebsmotors nicht nur eine Anpassung der Antriebsleistung an die vom Zusteller bzw. Verteiler beabsichtigte Fahrgeschwindigkeit und zwar unabhängig vom Umfang der Beladung, d.h. dem momentanen Gesamtgewicht, des Wagens und unabhängig von Steigungs-oder Gefällestrecken, sondern auch einen sparsamen Energieverbrauch gewährleistet. Bei der bekannten Bauart eines solchen Verteiler-bzw. Zustellerwagens ist vorgesehen, daß der Griffbügel nach Art eines Fahrradlenkers ausgebildet und über eine durch einen einzigen Holm gebildete Verbindung mit dem Wagenchassis verbunden ist und daß für die Steuerung der Energieversorgung der Elektromotoren ein die Verwindung des Holmes nach Richtung und Größe erkennender Sensor verwendet wird. Der Einsatz eines außer Druck-und Zugkräften auch noch Verwindungskräfte erkennenden und in Steuersignale für die Energieversorgung der Antriebsmotoren umsetzenden Sensors erfordert einen hohen technischen und wirtschaftlichen Aufwand und begrenzt dabei zugleich auch noch die Möglichkeiten zur Festlegung einer Einschaltschwelle für den Wagenantrieb erheblich.

Bei der vorstehend vorgestellten, wie auch alle sonstigen bekannten Bauarten hilfkraftunterstützter Verteiler-bzw. Zustellerwagen zeichnet sich die Ausbildung des Hilfskraftantriebes und seiner Steuerung durch eine von vornherein und unveränderlich auf die Ausstattung einer bestimmten Ausführungsform eines Verteiler-bzw. Zustellerwagens gerichtete Ausrichtung aus und kann daher nur in Verbindung mit Neuwagen verwendet werden. In Anbetracht der Langlebigkeit des Gerätes ist im Interesse eines wirtschaftlichen Einsatzes der Hilfskraftunterstützung von Verteiler-bzw. Zustellerwagen als weitgehende Arbeitserleichterung eine Vereinheitlichung der erforderlichen Bauteile, welche auch eine Nachrüstung bereits vorhandener Verteiler-bzw. Zustellerwagen ermöglicht, anzustreben.

Der Erfindung liegt daher die Aufgabe zugrunde einen Hilfsantrieb für Zusteller-bzw. Verteilerwagen der eingangs genannten Bauart dahingehend zu verbessern, daß er mit einem geringstmöglichen wirtschaftlichen und technischen Aufwand herstellbar und insbesondere hinsichtlich seiner Ausbildung und Steuerung an unterschiedlichsten Bauarten von Zusteller-bzw. Verteilerwagen einsetzbar sowie auch als Nachrüstsatz montierbar ist und daß er hinsichtlich der Handhabung im Betrieb ergonomisch günstig gestaltet und zugleich optimal manövierbar sowie absolut betriebssicher ist.

Diese Aufgabe wird bei einem Verteiler-bzw. Zustellwagen gemäß Anspruch 1 gelöst. Gegenüber allen unveränderlich programmierten Steuer-und Regeleinheiten bringt eine freie Programmierbarkeit der Steuer-und Regeleinheit den Vorteil mit sich, daß eine einheitlich ausgebildete Steuer-und Regeleinheit in Verbindung mit Wagen beliebiger Ausführungsform eingesetzt und durch entsprechgendes Programmieren sowohl den aus der Wagenbauart als auch den aus dem Einsatzbereich eines Wagens resultierenden, unterschiedlichen Anforderungen angepaßt werden kann, woraus sich der weitere Vorteil einer verhältnismäßig einfachen Nachrüstbarkeit auch vorhandener Wagen ergibt. Darüberhinaus eröffnet sich die Möglichkeit einer einfach auszuführenden, späteren Anpassung vorhandener Wagen an veränderte Betriebsbedingungen. Im Weiteren ermöglicht die freie Programmierbarkeit der Steuer-und Regeleinheit schließlich auch die gegenseitige Anpassung als standartisierte Baugruppen ausgebildeter Komponenten eines Hilfsantriebes für Verteiler-bzw. Zustellwagen.
Die Erfindung macht sich zu Nutze, daß ein praktisch allen überhaupt vorkommenden Betriebsverhältnissen von Verteiler-bzw. Zustellerwagen gerecht werdender Hilfsantrieb so ausgelegt sein sollte, daß der Wagen bei geringer Belastung und ebener sowie keinerlei erhöhten Rollwiderstand bietender Fahrbahn frei verfahrbar und ein Hilfsantrieb erst bei Überschreiten einer Schwelle für die vom Bediener aufzubringende Schub-oder Zugkraft bzw. gegebenenfalls Bremskraft wirksam wird.

In einer bevorzugten Verwirklichungsform ist vorgesehen, daß die die Energieversorgung der Elektromotoren beherrschende Steuer-und Regeleinheit einen elektronischen Rechner und einen frei programierbaren Speicher umfaßt.
Dabei ist zweckmäßigerweise weiter vorgesehen, daß der frei programmierbare Speicher der Steuer-und Regeleinheit die Kriterien für die Zuschaltung bzw. Stromversorgung der Elektromotoren, wie zulässige, vom Bediener aufzubringende Kraft, Anpassung an variierende Betriebsverhältnisse und dergl., in Abhängigkeit von Anwendungsfall beinhaltet, derart, daß der Hilfsantrieb mittels entsprechender Programmierung unabhängig von den Besonderheiten der jeweiligen in Betracht zu ziehenden Einsatzbedingungen des Wagens, wie vorraussichtliches Ladungsgewicht, Betrieb auf geneigter Fahrbahn, Fahrbahnbeschaffenheit und dergl. auf eine bestimmte und gewünschte Fahrcharakterisik des Wagens ausgerichtet werden kann.
Im Rahmen der Ausstattung eines Verteiler-bzw. Zustellerwagens mit einer bestimmten und gewünschten Fahrcharakteristik kann im Programm der Steuer-und Regeleinheit berücksichtigt werden, daß einerseits die Antriebsmotoren in an sich bekannter Weise als getriebelose in die Laufrollen des Wagens integrierte Elektromotoren ausgebildet und so gestaltet sind, daß sie lediglich bei Stromzufuhr aktiviert werden, im übrigen aber einem widerstandslosen Rollen der Laufrollen des Wagens keinen Widerstand entgegensetzen und daß zugleich in die Ansteuerung der Elektromotoren eine vorzugsweise einstellbare Schwelle eingefügt ist, derart, daß die Ansteuerung bzw. Stromversorgung der Elektromotoren erst einsetzt, wenn die vom Bediener auf den Wagen ausgeübte Zug-oder Schubkraft eine vorbestimmte Schwelle übersteigt.

Der frei programmierbare Speicher der Steuer-und Regeleinheit kann in verschiedener Weise gestaltet und bei einer mit dem Rechner baueinheitlichen Anordnung mittels einer über einen besonderen durch eine Schnittstelle gebildeten Eingang an den Rechner anschließbaren, externen Einrichtung programmierbar sein.
In einer für eine Reihe von praktischen Anwendungsfällen zweckmäßigen Ausgestaltung kann ferner vorgesehen sein, daß der frei programmierbare Speicher der Steuer-und Regeleinheit als austauschbares Ansatzteil vermittels einer Schnittstelle mit der Rechnereinheit verbindbar ist, wobei das Ansatzteil jede Art von an den Rechner ansteckbarem oder in den Rechner einsteckbarem Datenträger sein kann.

In Anpassung an eine erste Bauart insbesondere eines vergleichsweise kleinen Verteiler-bzw. Zustellerwagens kann in Anwendung der Erfindung vorgesehen, daß bei einem über zwei mit einem getrieblos integrierten Radnabenmotor ausgestattete hintere Bockrollen sowie wenigstens eine vordere Rolle gegen den Boden abgestützten Verteiler-bzw. Zustellerwagen ein als Deichsel ausgebildeter Griffbügel des Wagens mit lediglich einem Handgriff ausgestattet ist wobei der Handgriff mit einem ersten Paar die an der Deichsel in Wagenlängsrichtung ausgeübten Schub-und Zugkräfte und mit einem zweiten Paar die in Wagenquerrichtung an der Deichsel ausgeübten Lenkkräfte erfassenden und in Steuersignale für die die Energieversorgung der Radnabenmotoren beherrschende Steuer-und Regeleinheit umwandelden Kraftmessern ausgestattet ist.

Zur Erzielung eine platzsparenden Unterbringung der der Erfassung von Schub-oder Zugkräften sowie der Erfassung von Lenkkräften zugeordneten Kraftmesser innerhalb eines einzigen Handgriffes ist zweckmäßigerweise vorgesehen, daß die Kraftmesser durch Streifen aus einem seinen elektrischen Widerstand in Abhängigkeit von einer auf seine Grundrißfläche insgesamt aufgebrachten Druckkraftbeaufschlagung varierendem Folienmaterial gebildet sein und sowohl in Wagenlängsrichtung als auch in Wagenquerrichtung einander gegenüberliegend an einem einen quaratischen Profilquerschnitt aufweisenden vertikal ausgerichteten Griffsteg des an die Deichsel angeschlossenen Handgriffes angeordnet sind.
Im Weiteren kann bei dieser Verwirklichungsform eines Hilfsantriebes für einen Verteiler.-bzw. zustellerwagen vorgesehen sein, daß zusätzlich die frei programmierbare Steuer-und Regeleinheit in dem an die Deichsel angeschlossenen Handgriff untergebracht ist und mit den Radnabenmotoren der Bockrollen lediglich über mit Anschlußsteckern ausgestattete Steuerleitungen in Verbindung steht.

Bei einer abgewandelten Ausführungsform größerer Verteiler-bzw. Zustellerwagens ist vorgesehen, daß der Griffbügel des Wagens mit zwei in Wagenquerrichtung zueinander beabstandet angeordneten Handgriffen ausgestattet ist, wobei in jedem der beiden Handgriffe zwei bezüglich eines Widerlagers einander gegenüberliegend angeordnete lediglich auf den Wagen ausgeübte Schub-und Druckkräfte erkennende, insbesondere durch Streifen eines Folienmaterials, welches seinen elektrischen Widerstand proportional zu einer auf seine Gesamtfläche insgesamt aufgebrachten Druckkraft ändert, gebildete Kraftmesser angeordnet sind. In vorteilhafter Ausgestaltung dieser Ausführungsform ist zweckmäβigerweise weiter vorgesehen, daß jedem der aus zwei in einen Handgriff integrierten Folienstreifen gebildeten Kraftmesser ein eigener Eingang des Rechners der Steuer-und Regeleinheit zugeordnet ist und daß jedem der beiden Kraftmesser jeweils ein Ausgang des Rechners zur Ansteuerung eines Radnabenantriebes zugeordnet ist.

Unabhängig davon bei welcher der beiden vorgenannten Bauarten von Verteiler-bzw. Zustellerwagen, der erfindungsgemäße Hilfsantrieb eingesetzt wird, ist im Interesse einer Vereinheitlichung von Komponenten vorteilhafterweise vorgesehen, daß die Ein-und Ausgänge des Rechners der Steuereinheit mit als Steckanschlüsse ausgebildeten Schnittstellen versehen sind und die Hangriffe sowie die jeweils einen getriebelos integrierten Antriebsmotor aufweisenden angetriebenen Rollen vermittels Adapter an das Chassis des Wagens anbaubar sowie vermittels Steckverbindungen mit den Ein-bzw. Ausgängen des Rechners verbindbar sind. Die Ausbildung der verschiedenen Bauteile, wie Handgriffe oder antreibbarer Rollen als jeweils eigenständige Bauelemente, welche bei im Wesentlichen einheitlicher Ausführung lediglich vermittels geeigneter Adapter an praktische jeden beliebigen Wagen, gegebenenfalls sogar im Austausch zu vorhandenen Bauteilen anbaubar sind führt in Verbindung mit einer Anschlußververbindung jeweils über ansteckbare Leitungen zu einem Baukastensystem, dessen Bausteine bei einheitlicher Ausführung für alle vorkommenden Anwendungsfälle einsetzbar sind. Diese weitreichende Einsetzbarkeit der einzelnen Bausteine eines Baukastensystemes wird dadurch ermöglicht, daß die Steuer-und Regeleinrichtung frei programmierbar ist und daher auf dem Regelweg eine Anpassung der Funktionen der Bauteile an die Anforderungen von Wagen unterschiedlichen Gewichtes oder unterschiedlichen Lenkverhaltens und dergl. mehr herstellt.

In weiterer, von der Bauart eines Verteiler-bzw. Zustellerwagens unabhängiger Ausgestaltung von Komponenten einer Hilfsantriebseinrichtung kann ferner vorgesehen sein, daß zumindest der vertikal gerichtete Griffsteg jedes Handgriffes mit einer Ummantelung aus einem elastischen Material ausgestattet ist und daß die der Ansteuerung der Radnabenmotoren zugeordneten Ausgänge des Rechners jeweils vermittels einer Treiberstufe und einer Endstufe an eine durch einen Stecker gebildete Schnittstelle angeschlossen sind.
Schließlich ist es ferner auch noch zweckmäßig hilfskraftbetriebene Verteiler-und Zustellerwagen mit einem Schalter zur Stillegung der Hilfskraftantriebseinrichtung des Wagens und einer Ladezustandsanzeige der Akkumulatoren auszustatten, wobei vorgesehen sein kann, daß wenigstens einer der Handgriffe eines Wagens mit einer, insbesondere durch eine Leuchtdiode gebildeten Ladezustandsanzeige, versehen ist.

Im Rahmen der Verwirklichung eines Verteiler-und Zustellerwagens kann abweichend von den weiter oben als besonders vorteilhaft herausgestellten auch jede andere bekannte und geeignete Bauart von Kraftmessern verwendet werden, sofern sie bei ausreichender Betriebssicherheit hinreichend kleinbauend gestaltet werden können, um innerhalb eines Handgriffes für einen Verteiler-und Zustellerwagen untergebracht werden zu können.

Im Rahmen einer weiteren Verwirklichungsform insbesondere größerer Verteiler-bzw. Zustellerwagen kann auch vorgesehen sein, daß der Griffbügel aus einem rohrförmigen Profilmaterial besteht und insgesamt als etwa U- förmiger Schiebebügel ausgebildet ist, wobei die freien Enden der beiden Profilschenkel der U-Form im wesentlichen vertikal aufragend und starr an das Wagenchassis angeschlossen sind und wobei der Profilgrund der U-Form einen zumindest zum Benutzer hin abgewinkelten Bügel bildet und daß an jedem der beiden Profilschenkel des Schiebebügels je ein Sensor bzw. Moment-oder Kraftmesser angeordnet ist.

Insbesondere ergibt sich eine vorteilhafte Ausgestaltungsmöglichkeit daraus, daß die beiden Sensoren bzw. Moment-oder Kraftmesser bezüglich des Profilmaterials des Schiebebügels innenliegend angeordnet sind und jeweils als lineare, ausschließlich in Wagenlängsrichtung gerichtete Kräfte erfassende Kraft-oder Momentmeßeinrichtung ausgebildet sind. Damit können Sensoren bzw. Kraft-oder Momentmesser eingesetzt werden, welche lediglich in einer Ebene wirkende Kräfte erfassen und sich daher zum einen durch eine verhältnismäßig einfache und damit kostengünstige Bauart auszeichnen und welche es zum anderen zugleich auch ermöglichen die Einschaltschwelle des Antriebes des Wagens wenigstens innerhalb gewisser Grenzen exakter festzulegen, so daß sich der Wagen nicht infolge unbeabsichtigter Berührungen unbeabsichtigt in Bewegung setzen kann, sondern vielmehr eine gewisse Mindestkraft am Schiebebügel angreifen muß, um eine Inbetriebnahme bzw. ein Anlaufen der Elektromotoren auszulösen. Selbstverständlich kann ergänzend auch ein den Sensoren nachgeschaltetes Zeitglied oder dergl. vorgesehen sein, welches dafür sorgt, daß eine Inbetriebnahme bzw. ein Anlaufen der Elektromotoren nur bei über einen gewissen Zeitraum hin am Schiebebügel angreifender Krafteinwirkung ausgelöst wird, so daß auch ein verhältnismäßig hartes Anrempeln des Schiebebügels noch keine eigenständige Bewegung des Wagens auslösen kann.

Dies insbesondere dann, wenn gemäß einer bevorzugten Ausgestaltungform vorgesehen ist, daß jeder der beiden Sensoren bzw. Moment-oder Kraftmesser jeweils einem der beiden Elektromotoren der Antriebsachse und zwar jeweils dem an der gleichen Wagenseite angeordneten Elektromotor zugeordnet ist, derart, daß jeder der beiden Antriebsmotoren einer Achse ausschließlich von dem mit ihm gleichseitig angeordneten Kraft-oder Momentmesser bzw. Sensor lediglich eine der in der entsprechenden Richtung an dem zugehörigen Schenkel des Schiebebügels wirkenden Schub-oder Zugkraft entsprechende Energiezufuhr in Vorwärts oder Rückwärtsfahrtrichtung zugeteilt erhält. Daraus resultiert, daß bei symetrischem bzw. mittigem Kraftangriff am Schiebebügel beide Antriebsmotoren gleichmäßig mit einer der Größe der am Schiebebügel ausgeübten Schub-oder Zugkraft entsprechenden Energiemenge in Vorwärts-oder Rückwärtsfahrtrichtung versorgt werden, so daß der Wagen geradlinig und mit einer der Größe der am Schiebebügel ausgeübten Kraft entsprechenden Geschwindigkeit entweder vorwärts oder rückwärts fährt. Bei unsymetrischem, insbesondere auch einseitigem Kraftangriff am Schiebebügel werden die beiden Antriebsmotoren zwar noch richtungsgleich aber entsprechend der Asymetrie des Kraftangriffes mit unterschiedlichen Energiemengen versorgt, so daß der Wagen eine Kurve mit einem der Größe der Asymetrie des Kraftangriffes am Schiebebügel entsprechenden Radius fährt. Bei von der einen zur anderen Wagenlängsseite entgegengesetzt gerichtetem Kraftangriff am Schiebebügel werden die Antriebsmotoren in entgegengesetzten Richtungen mit Energie versorgt, so daß der Wagen auf der Stelle dreht.

Für die Anordnung und Ausbildung der Sensoren als Kraft-oder Momentmesser stehen hierbei wenigstens zwei Möglichkeiten zur Verfügung, in der Weise, daß im Bereich der Fußteile der Profilschenkel des Schiebebügels angeordnete Sensoren als Momentmesser und im Bereich des Bügels des Schiebebügels angeordnete Sensoren zweckmäßigerweise als Kraftmesser ausgebildet sind. In jedem Fall sind die Sensoren, seien sie nun als Kraft-oder als Momentmesser ausgebildet, in an sich bekannter Weise zur Erzeugung eines die angreifende Kraft bzw. das angreifende Moment wiederspiegelnden Steuerstromes zur Ansteuerung der Steuereinrichtung für die Energiezufuhr für den jeweils zugehörigen bzw. gleichseitig angeordneten Elektromotor ausgebildet sind. In einer bevorzugten Auswahl der Anordnung und Ausbildung der Sensoren kann jedoch vorgesehen sein, daß diese als Momentmesser ausgebildet und im Fußbereich der Profilschenkel des Schiebebügels angeordnet sind, was bei einfacherer Ausbildung der Sensoren und des jeweils nachgeschalteten Steuerkreises eine größere Unempfindlichkeit der Ansteuerung der Elektromotoren gegenüber unbeabsichtigten Berührungen des Schiebebügels ermöglicht.

Die Erfindung ist in der nachfolgenden Beispielsbeschreibung anhand einiger in der Zeichnung dargestellter Ausführungsbeispiele im Einzelnen beschrieben.

In der Zeichnung zeigt die
- Figur 1: eine schematische schaubildliche Darstellung des Chassis samt Anordnung der Sensoren im Schiebebügel eines Verteiler-bzw. Zustellerwagens;
- Figur 2: eine Einzelheit zu Figur 1 im vergrößerten Maßstab;
- Figur 3: eine schematische schaubildliche Darstellung des Chassis samt abgewandeltes Anordnung der Sensoren im Schiebebügel eines Verteiler-bzw. Zustellerwagens;
- Figur 4: eine schematische schaubildliche Darstellung des Chassis einer abgewandelten Bauart eines Verteiler-bzw. Zustellerwagens mit Anordnung der Sensoren im einzigen Handgriff;
- Figur 5: eine schematische schaubildliche Darstellung des Chassis einer anderen abgewandelten Bauart eines Verteiler-bzw. Zustellerwagens mit Anordnung der Sensoren in den beiden Handgriffen;
- Figur 6: eine Explosionsdarstellung zu Figur 5;
- Figur 7: eine schematische schaubildliche Darstellung des Chassis einer weiteren nicht erfindungsgemäßen abgewandelten Bauart eines mit Anordnung der Sensoren in den beiden Handgriffen;
- Figur 8: eine schaubildliche Einzeldarstellung eines Handgriffes;
- Figur 9: eine Schnittdarstellung durch einen bei einem mit einer Deichsel ausgestatteten Verteiler-bzw. Zustellerwagen als Einzelgriff eingesetzten Handgriff;
- Figur 10: eine Schnittdarstellung durch seinen bei mit zwei Griffen ausgestatteten Verteiler-bzw. Zustellerwagen eingesetzten Handgriff;
- Figur 11: eine schematische Darstellung der Steuer-und Regeleinheit eines Verteiler-bzw. Zustellerwagens gemäß einer jeder der Ausführungsformen nach Figur 1 bis 7;
- Figur 12: eine schematische Explosionsdarstellung des baukastenarigen Aufbaues eines mit einem Hilfsantrieb ausgestatteten Verteiler-bzw. Zustellerwagens.

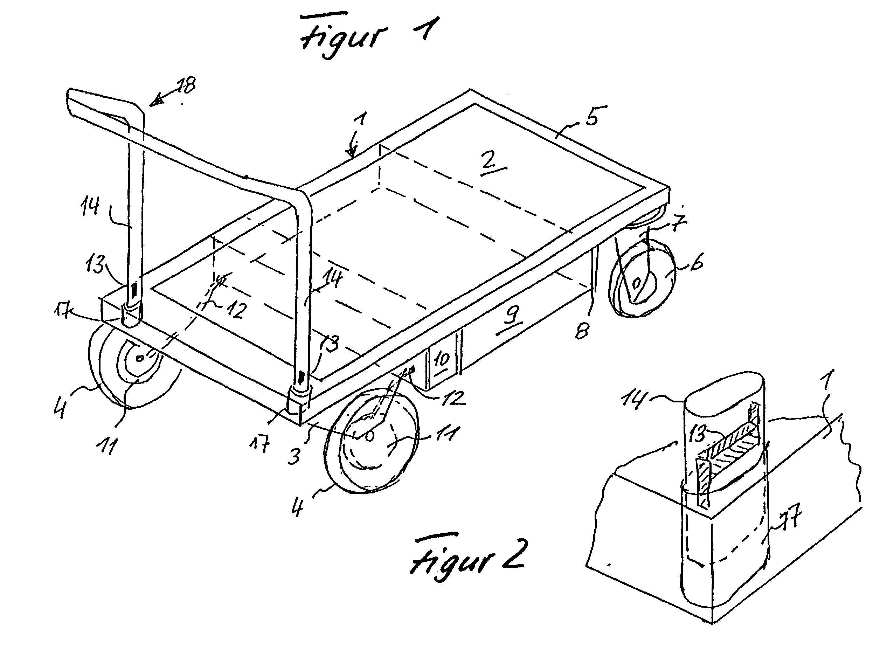

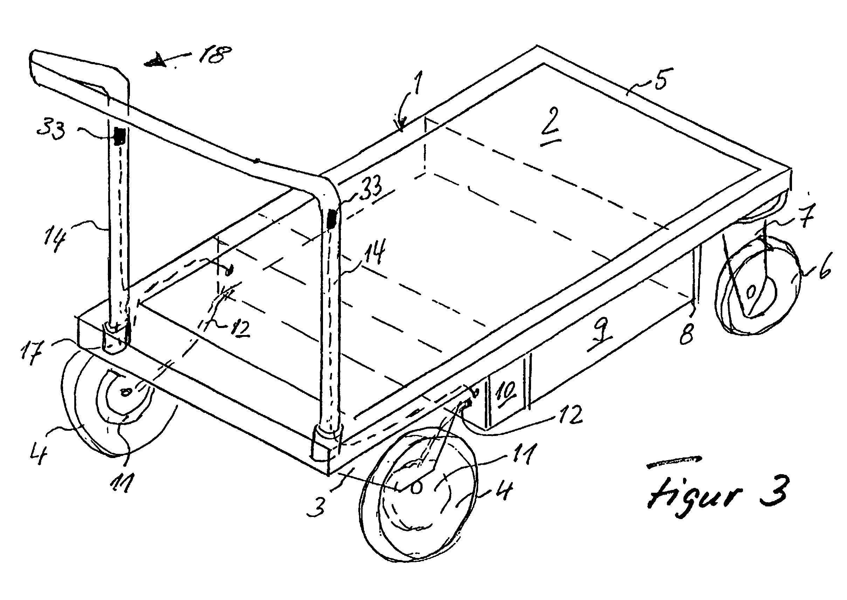

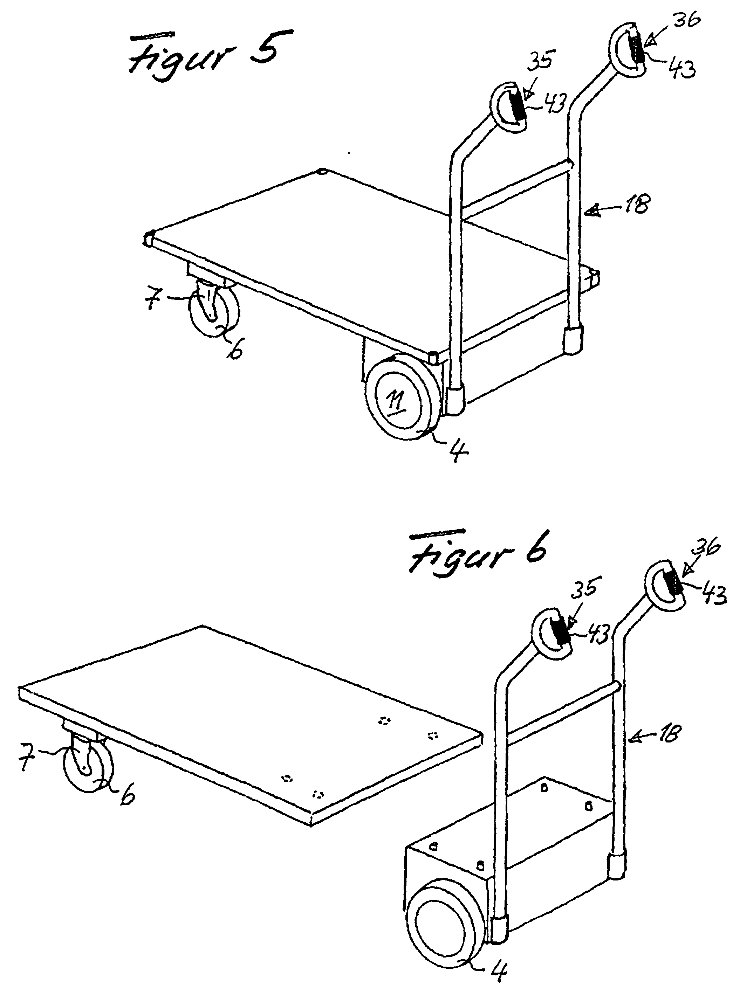

Das Chassis der in der Zeichnung schematisch dargestellten Verteiler-bzw. Zustellerwagen besteht im wesentlichen aus einem umlaufenden Profilmaterialrahmen 1, an dem einerseits Aufstandsflächen 2 für einen nicht näher dargestellten Wechselaufbau und andererseits Achsträger 3 für starre Bockrollen 4 sowie vermittels eines Querträgers 5 die den vorderen Lenkrollen 6 zugeordneten Lenkrollenaufhängungen bildenden Joche 7 angeschlossen sind. In einer Einschubhalterung 8 des Wagenchassis ist in einem Batteriekasten 9 ein Satz Batterien oder Akkumulatoren aufgenommen. Neben dem Batterie- oder Akkumulatorensatz ist ferner eine elektronische Steuerschaltung 10 untergebracht, wobei die Steuerschaltung 10 die Regelung der Energieversorgung von den Bockrollen 4 zugeordneten und als Radnabenmotoren ausgebildeten, unter Last anlaufenden sowie drehrichtungsumkehrbaren Elektromotoren 11 übernimmt und mit diesen über Steuer-und Versorgungsleitungen 12 verbunden ist. Der Signalerzeugung für die Steuerschaltpung 10 sind in der Ausführungsform nach Figur 1 als Momentmesser ausgebildete Sensoren 13 zugeordnet, von denen lediglich eine schematische Darstellung 13 gezeigt ist.
An den Profilmaterialrahmen 1 ist weiterhin vermittels zweier Klemmhülsen 17 starr ein Schiebebügel 18 angeschlossen. Der insgesamt etwa U-förmig ausgebildete Schiebebügel 18 besteht, wie insbesondere aus der Darstellung der Figur 2 ersichtlich, aus einem rohrförmigen Profilmaterial und ist über die freien Enden seiner beiden Profilschenkel 14 im wesentlichen vertikal aufra-gend und starr an das Wagenchassis 1 angeschlossen. Der Profilgrund der U-Form des Schiebebügels 18 bildet einen bei 15 zum Benutzer hin abgewinkelten Bügel 16. In jedem der beiden Profilschenkel 14 des Schiebebügels 18 ist im Bereich deren Fußteiles je ein als Momentmesser ausgebildeter Sensor 13 angeordnet, wobei die beiden Sensoren 13 jeweils bezüglich des Profilmaterials des Schiebebügels 18 innenliegend angeordnet und jeweils als lineare, lediglich in einer Ebene ausschließlich in Wagenlängsrichtung gerichtete Momente erfassende Meßeinrichtung ausgebildet sind. Jeder der beiden Sensoren 13 ist jeweils einem der beiden Elektromotoren 11 der Antriebsachse und zwar jeweils dem an der gleichen Wagenseite angeordneten Elektromotor 11 zugeordnet, derart, daß jeder der beiden Antriebsmotoren einer Achse von dem mit ihm gleichseitig angeordneten Sensor 13 lediglich eine der in der entsprechenden Richtung an dem zugehörigen Schenkel des Schiebebügels 18 wirkenden Schub-oder Zugkraft entsprechende Energiezufuhr in Vorwärts oder Rückwärtsfahrtrichtung zugeteilt erhält. Daraus resultiert, daß bei symetrischem bzw. mittigem Kraftangriff am Schiebebügel 18 beide Antriebsmotoren 11 gleichmäßig mit einer der Größe der am Schiebebügel ausgeübten Schub-oder Zugkraft entsprechenden Energiemenge in Vorwärts-oder Rückwärtsfahrtrichtung versorgt werden, so daß der Wagen geradlinig entweder vorwärts oder rückwärts fährt. Bei unsymetrischem Kraftangriff am Schiebebügel 18 werden die beiden Antriebsmotoren 11 zwar noch richtungsgleich aber entsprechend der Asymetrie des Kraftangriffes mit unterschiedlichen Energiemengen versorgt, so daß der Wagen eine Kurve mit einem der Größe der Asymetrie des Kraftangriffes am Schiebebügel entsprechenden Radius fährt. Bei von der einen zur anderen Wagenlängsseite entgegengesetzten Kraftangriff am Schiebebügel 18 werden die Antriebsmotoren 11 in entgegengesetzten Richtungen mit Energie versorgt, so daß der Wagen auf der Stelle dreht.
Der Schiebebügel in sich torsionssteif ausgebildet, was im gezeigten Ausführungsbeispiel durch eine in gestrichelten Linien angedeutete Aussteifung 19 erreicht ist.
In der Ausführungsform nach Figur 3 ist in jedem der beiden Profilschenkel 14 des Schiebebügels 18 ist je ein als Kraftmesser ausgebildeter Sensor 33 im Bereich des Bügels angeordnet, wobei die beiden Sensoren 33 gleichfalls jeweils bezüglich des Profilmaterials des Schiebebügels 18 innenliegend angeordnet und jeweils als lineare, lediglich in einer Ebene ausschließlich in Wagenlängsrichtung gerichtete Kräfte erfassende Meßeinrichtung ausgebildet sind. Woraus gleichfalls resultiert, daß bei symetrischem bzw. mittigem Kraftangriff am Schiebebügel 18 beide Antriebsmotoren 11 gleichmäßig mit einer der Größe der am Schiebebügel ausgeübten Schub-oder Zugkraft entsprechenden Energiemenge in Vorwärts-oder Rückwärtsfahrtrichtung versorgt werden.

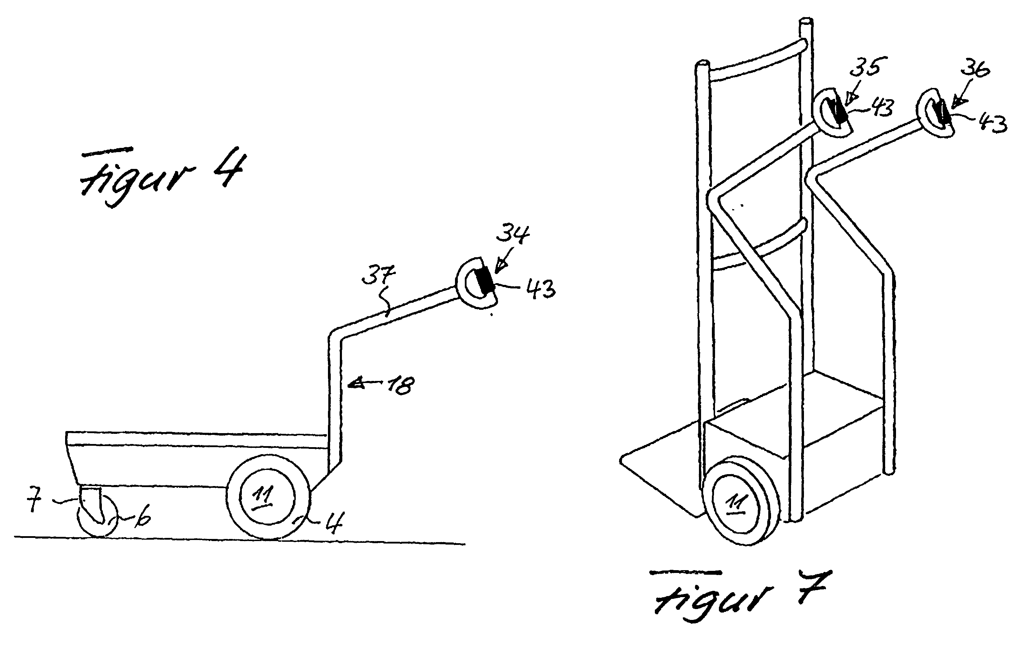

Die in den Figuren 4 bis 7 dargestellten Ausführungsformen von Verteiler-bzw. Zustellerwagen zeichnen sich durch eine Ausstattung mit einem 34 oder zwei Handgriffen 35,36 und die Unterbringung der Kraftmesser zur Erfassung der auf den Wagen ausgeübten Schub-oder Zugkräfte sowie der gegebenenfalls auf den Wagen ausgeübten Lenkkräfte innerhalb der Handgriffe 34,35,36 aus.

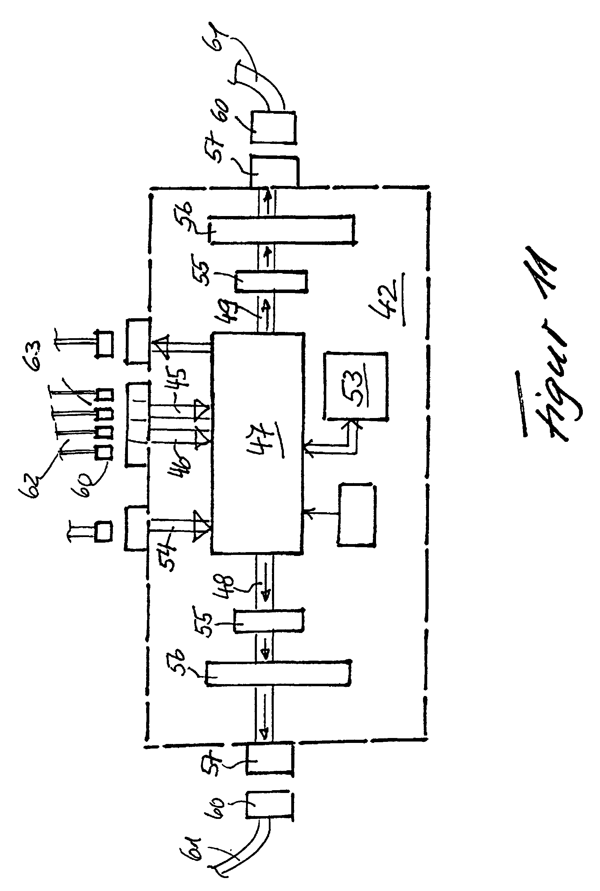

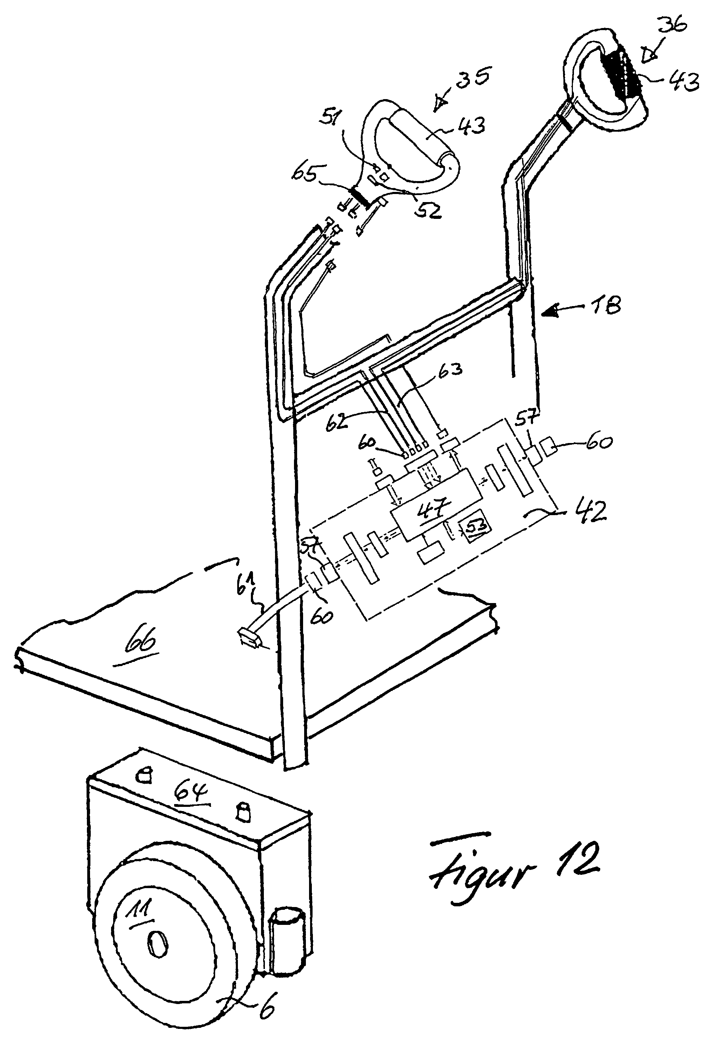

Bei der in der Figur 4 dargestellten Ausführungsform eines vergleichsweise kleinen Verteiler-bzw. Zustellerwagens ist das Chassis 66 des Wagens über zwei jeweils mit einem getrieblos integrierten Radnabenmotor 11 ausgestattete hintere Bockrollen 4 sowie eine vordere Rolle 6 gegen den Boden abgestützt. Der Verteiler-bzw. Zustellerwagen ist mit einem als Deichsel 37 ausgebileten Griffbügel 18 mit lediglich einem einzigen Handgriff 34 ausgestattet. Der der Darstellung nach Figur 8 entsprechende Handgriff ist entsprechend der Darstellung in Figur 9 mit einem ersten Paar 38 und 39 die an der Deichsel 37 in Wagenlängsrichtung ausgeübten Schub-und Zugkräfte und mit einem zweiten Paar 40 und 41 die in Wagenquerrichtung an der Deichsel 37 ausgeübten Lenkkräfte erfassenden und in Steuersignale für die die Energieversorgung der Radnabenmotoren 11 beherrschende Steuer-und Regeleinheit 42 umwandelden Kraftmessern ausgestattet. Die platzsparend innerhalb des Griffsteges 43 des Handgriffes 34 untergebrachten Kraftmesser 38 bis 41 sind durch Streifen aus einem seinen elektrischen Widerstand in Abhängigkeit von einer auf seine Grundrißfläche insgesamt aufgebrachten Druckkraftbeaufschlagung varierendem Folienmaterial gebildet und sowohl in Wagenlängsrichtung als auch in Wagenquerrichtung einander gegenüberliegend an einem einen quaratischen Profilquerschnitt aufweisenden starren und vertikal ausgerichteten Innenteil 44 des Griffsteges 43 des an die Deichsel 37 angeschlossenen Handgriffes 34 angeordnet. Innerhalb dieses als Hohlkörper ausgebildeten Innenteiles 44 des Griffsteges 43 des Handgriffes 34 ist bei dieser Ausführungsform auch eine weiter unten im Einzelnen beschriebene, frei programmierbare Steuer-und Regeleinheit 42 untergebracht. Mit den Radnabenmotoren 11 der Bockrollen 4 steht die im Handgriff 34 untergebrachte, frei programmierbare Steuer-und Regeleinheit 42, lediglich über mit Anschlußsteckern 45 ausgestattete, in der Zeichnung nicht besonders dargestellte Steuerleitungen in Verbindung.

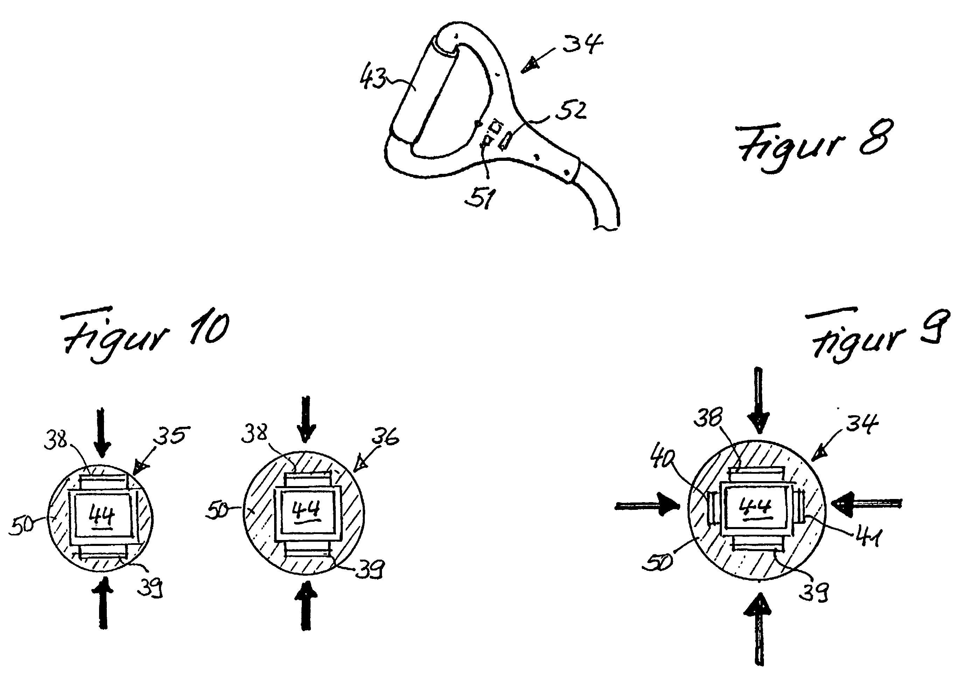

Bei der in den Figuren 5 und 6 dargestellten Ausführungsform eines größeren, über zwei hintere Bockrollen 4 und zwei vordere Lenkrollen 6 gegen den Boden abgestützten Verteiler-bzw. Zustellerwagens ist der Griffbügel 18 des Wagens mit zwei in Wagenquerrichtung zueinander beabstandet angeordneten Handgriffen 35 und 36 ausgestattet, wobei, gemäß der Darstellung in der Figur 10 in jedem der beiden Handgriffe 35 und 36 zwei einander bezüglich eines durch ein starres Innenteil 44 des Griffsteges 43 gebildeten Widerlagers einander gegenüberliegend angeordnete lediglich auf den Wagen ausgeübte Schub-und Druckkräfte erkennende, insbesondere durch Streifen eines Folienmaterials, welches seinen elektrischen Widerstand proportional zu einer auf seine Gesamtfläche insgesamt aufgebrachten Druckkraft ändert, gebildete Kraftmesser 38 und 39 angeordnet sind.

Bei dieser Ausführungsform ist jedem der zwei jeweils in einen Handgriff 35 und 36 integrierten aus Folienstreifen gebildeten Kraftmesser 38 und 39 ein eigener Eingang 45 bzw. 46 des von den Handgriffen 35,36 unabhängig als eigenständige Baueinheit am Chassis des Wagens angeordneten Rechners 47 der frei programmierbaren Steuer-und Regeleinheit 42 zugeordnet und ist ferner jedem der beiden Kraftmesser 38,39 jeweils ein Ausgang des Rechners 47 zur Ansteuerung eines Radnabenantriebes 11 zugeordnet, wobei jedem Engang 45,46 des Rechners 47 ein seitengleicher Ausgang 48,49 zugeordnet ist, derart, daß die an dem einer Wagenlängsseite zugeordneten Handgriff 35 bzw. 36 ermittelten Bedienerkräfte jeweils zu einer entsprechenden Ansteuerung der Radnabenmotors 11 der der gleichen Wagenlängsseite zugeordneten Bockrolle 4 führen.

Die in der Figur 7 nicht erfindungsgemäße dargestellte Ausführungsform eines Verteiler-bzw. Zustellerwagens unterscheidet sich von der vorstehend erläuterten Ausführungsform nach den Figuren 5 und 6 dadurch, daß der Wagen als zweirädrige, lediglich zwei vermittels Radnabenmotoren 11 antreibbare, um eine feststehende Achse rotierende Laufrollen 4 aufweisende Karre gestaltet ist. Hinsichtlich der Ansteuerung der Radnabenmotoren 11 mittels einer frei programmierbaren Steuer-und Regeleinheit 42 sowie hinsichtlich der Ausbildung der Handgriffe 35 und 36 und der in diesen angeordneten Kraftmesser 38 und 39 entspricht die Ausrüstung dieser Ausführungsform eines Verteiler-bzw. Zustellerwagens derjenigen der vorstehend im Zusammenhang mit einem über insgesamt vier Rollen gegen den Boden abgestützten Ausführungsform.

Der Griffsteg des in der Figur 8 dargestellten Handgriffes 34 weist ein starres Innenteil 44 mit einer rechteckigen, mit wenigstens zwei ihrer einander gegenüberliegenden Wandungen ein Widerlager für Kraftmesser 39 und 39 bildende Profilquerschnittform auf, wobei gemäß der Darstellung in der Figur 10 bei paarweise an einem Verteiler-bzw. Zustellerwagen anzuordnenden Handgriffen 35 und 36 zwei jeweils durch einen Streifen eines Folienmaterials, welches seinen elektrischen Widerstand proportional zu einer auf seine Gesamtfläche aufgebrachten Druckkraft ändert, bestehende Kraftmesser 38 und 39 einander in Wagenlängsrichtung gegenüberliegend angeordnet sind. Bei als einziger Handgriff 34 an einem Verteiler-bzw. Zustellerwagen einzusetzenden Handgriffen sind gemäß der Darstellung nach Figur 9 zur Erfassung von Lenkkräften zwei weitere einander in Wagenquerrichtung gegenüberliegend gegen das Innenteil 44 des Griffsteges 43 des Handgriffes 34 abgestützte, gleichfalls durch Folienstreifen gebildete Kraftmesser 40 und 41 angeordnet. Im Übrigen ist der Griffsteg 43 des Handgriffes 34 bei jeder Anwendungsform mit einer Umhüllung 50 aus einem zwar innerhalb gewisser Grenzen elastisch verformbaren, jedoch Druckkräfte übertragenden Material umhüllt. An dem Handgriff 34 sind zudem ein Schalter 51 zur Stillegung der Hilfskraftantriebseinrichtung des Verteiler-bzw. Zustellerwagens und eine durch eine Leuchtdiode 52 gebildete Ladezustandsanzeige der Akkumulatoren angeordnet.

Die in der Figur 11 schematisch dargestellte, die Energieversorgung der Elektromotoren beherrschende Steuer-und Regeleinheit 42 ist insgesamt auf einem Trägerteil angeordnet und umfaßt einen elektronischen Rechner 47 und einen frei programierbaren Speicher 53, wobei jedem der Kraftmesser 38 bis 41 ein eigener Eingang 45, 46 und jedem der beiden Elektromotoren 11 jeweils ein eigener Ausgang 48, 49 des Rechners 47 zugeordnet sind. Der frei programmierbare Speicher 53 der Steuer-und Regeleinheit 42 enthält die variablen Kriterien für die Zuschaltung bzw. Stromversorgung der Elektromotoren, wie zulässige, vom Bediener aufzubringende Kraft, Anpassung an varierende Betriebsverhältnisse und dergl., und kann in Abhängigkeit von Anwendungsfall programmiert werden, wozu bei der gezeigten Ausführungsform der frei programmierbare Speicher 53 der Steuer-und Regeleinheit 42 mit dem Rechner 47 baueinheitlich angeordnet und mittels einer in der Zeichnung nicht besonders dargestellten, über einen besonderen durch eine Schnittstelle gebildeten Eingang 54 an den Rechner 47 anschließbaren, externen Einrichtung programmierbar ist. Sämtliche Ein-und Ausgänge des Rechners 47 der Steuer-und Regeleinheit 42 sind mit als Steckanschlüsse ausgebildeten Schnittstellen zum Anschluß von Leitungsverbindungen einerseits zu den Kraftmessern und andererseits zur Stromversorgung für die Radnabenmotoren 11 des Systems versehen.
Insbesondere sind die der Ansteuerung der Radnabenmotoren 11 zugeordneten Ausgänge 48 und 49 des Rechners 47 jeweils vermittels einer Treiberstufe 55 und einer Endstufe 56 an eine durch einen Stecker 57 gebildete Schnittstelle angeschlossen.

In der Figur 12 ist schließlich anhand einer schematischen Explosionsdarstellung ein sich aus einer Vereinheitlichung von Komponenten ergebender Aufbau eines auch nachrüstbaren Hilfsantriebes für Verteiler-bzw. Zustellerwagen verdeutlicht. Gemäß der Darstellung nach Figur 12 sind die Ein-45,46 sowie 54 und die Ausgänge 48 und 49 des Rechners 47 der Steuer-und Regeleinheit 42 als Steckanschlüsse ausgebildet und sind der Verbindung der Steuer-und Regeleinheit 42 einerseits mit in den Handgriffen 34 bzw. 35,36 angeordneten Kraftmessern 38 bis 39 bzw. Kontrolleuchten 52 und dergl. und andererseits mit den Ansteuerungen der Radnabenmotoren 11 ihrerseits mit Steckanschlüssen 60 versehene Leitungsverbindungen 61, 62, 63 zugeordnet. Die Hangriffe 35 und 36 sowie die jeweils einen getriebelos integrierten Antriebsmotor 11 aufweisenden angetriebenen Rollen 4 sind vermittels Adapter 64 bzw. 65 an das Chassis 66 bzw. einen Griffbügel 18 des Wagens anbaubar.

## Patentansprüche

1. Verteiler-bzw. Zustellerwagen, bestehend aus einem aus Rahmenholmen und Quertraversen gebildeten und über wenigstens eine um eine vertikale Achse schwenkbare Lenkrolle (6) und zwei Bockrollen (4) gegen den Boden abgestützten Wagenchassis (66) und einem an dieses angeschlossenen aufragenden Griffbügel (18), wobei jeder der beiden Rollen eines Rollenpaares von Bock- (4) oder Lenkrollen (6) ein getriebelos integrierter, unter Last anlaufender, drehrichtungs-umkehrbarer Elektromotor (11) zugeordnet ist und wobei die Energieversorgung der Elektromotoren (11) durch eine Steuereinrichtung (10) beherrscht ist, welche wenigstens einen die auf den Wagen ausgeübte Zug-oder Schubkraft bzw. Lenkkraft erkennenden und in ein Steuersignal umsetzenden Kraftmesser (13, 33, 38 bis 41) und eine Steuer-und Regeleinrichtung (10) zur Energieversorgung der Elektromotoren (11) im Verhältnis zu der jeweils auf den Wagen ausgeübten Schub-oder Zugkraft umfaßt, **dadurch gekennzeichnet,**
**daß** die die Energieversorgung der Elektromotoren (11) beherrschende Steuer-und Regeleinheit durch (42) eine frei programmierbare elektronische Steuer-und Regeleinheit gebildet ist, wobei jedem der Kraftmesser (13, 33, 38 bis 41) ein eigener Eingang (45, 46) und jedem der beiden Elektromotoren (11) jeweils ein eigener Ausgang (48, 49) des Rechners (47) zugeordnet sind.

2. Verteiler-bzw. Zustellerwagen nach Anspruch 1, **dadurch gekennzeichnet, daß** die die Energieversorgung der Elektromotoren beherrschende Steuer-und Regeleinheit (42) einen elektronischen Rechner (47) und einen frei programierbaren Speicher umfaßt.

3. Verteiler-bzw. Zustellerwagen nach Anspruch 1 und 2, **dadurch gekennzeichnet, daß** der frei programmierbare Speicher (53) der Steuer-und Regeleinheit (42) die Kriterien für die Zuschaltung bzw. Stromversorgung der Elektromotoren, wie vom Bediener aufzubringende Kraft, Anpassung an varierende Betriebsverhältnisse und dergl., in Abhängigkeit von Anwendungsfall beinhaltet.

4. Verteiler-bzw. Zustellerwagen nach Anspruch 1 und 2, **dadurch gekennzeichnet, daß** der frei programmierbare Speicher (53) mittels einer über einen besonderen durch eine Schnittstelle gebildeten Eingang an den Rechner (47) anschließbaren, externen Einrichtung programmierbar ist.

5. Verteiler-bzw. Zustellerwagen nach einem oder mehreren der Ansprüche 1 bis 4, **dadurch gekennzeichnet, daß** die frei programmierbare Steuer-und Regeleinheit (42) als austauschbares Ansatzteil vermittels einer Schnittstelle mit der Rechnereinheit (47) verbindbar und durch jedwede Art von an der Rechner (47) ansteckbarem oder in den Rechner (47) einsteckbarem Datenträger gebildet ist.

6. Verteiler-bzw. Zustellerwagen nach Anspruch 5, **dadurch gekennzeichnet, daß** der Griffbügel (18) des Wagens als Deichsel ausgebildet und mit lediglich einem Handgriff ausgestattet ist und daß der Handgriff mit einem Paar die an der Deichsel in Wagenlängsrichtung ausgeübten Schub-und Zugkräfte und mit einem Paar die in die Wagenquerrichtung an der Deichsel ausgeübtenLenkkräfte erfassenden und in Steuersignale umwandelnden Kraftmessern (33) ausgestattet ist.

7. Verteiler-bzw. Zustellerwagen nach Anspruch 5 und 6, **dadurch gekennzeichnet, daß** die Kraftmesser durch Streifen aus einem seinen elektrischen Widerstand in Abhängigkeit von einer auf seine Grundrißfläche insgesamt aufgebrachten Druckkraftbeaufschlagung varierendem Folienmaterial gebildet und sowohl in Wagenlängsrichtung als auch in Wagenquerrichtung einander gegenüberliegend an einem einen quadratischen Profilquerschnitt aufweisenden vertikal ausgerichteten Griffsteg des an die Deichsel angeschlossenen Handgriffes angeordnet sind.

8. Verteiler-bzw. Zustellerwagen nach einem oder mehreren der Ansprüche 1 bis 3, **dadurch gekennzeichnet, daß** der Wagen mit zwei mit einem getrieblos integrierten Radnabenmotor ausgestatteten hinteren Bockrollen (11) und wenigstens einer vorderen Rolle (7) augestattet und die Steuer-und Regeleinheit in dem an die Deichsel angeschlossenen Handgriff untergebracht und mit den Radnabenmotoren der Bockrollen lediglich über mit Anschlußsteckern (60) ausgestattete Steuerleitungen in Verbindung steht.

9. Verteiler-bzw. Zustellerwagen nach Anspruch 8, **dadurch gekennzeichnet, daß** der Griffbügel des Wagens mit zwei in Wagenquerrichtung zueinander beabstandet angeordneten Handgriffen ausgestattet ist, wobei in jedem der beiden Handgriffe zwei bezüglich eines Widerlagers einander gegenüberliegend angeordnete lediglich auf den Wagen ausgeübte Schub-und Druckkräfte erkennende, insbesondere durch Streifen eines Folienmaterials, welches seinen elektrischen Widerstand proportional zu einer auf seine Gesamtfläche insgesamt aufgebrachten Druckkraft ändert, gebildete Kraftmesser angeordnet sind.

10. Verteiler-bzw. Zustellerwagen nach einem der Ansprüche 1 bis 9, **dadurch gekennzeichnet, daß** jedem der aus zwei in einen Handgriff integrierten Folienstreifen gebildeten Kraftmesser ein eigener Eingang (45, 46) des Rechners der Steuer-und Regeleinheit zugeordnet ist und daß jedem der beiden Kraftmesser jeweils ein Ausgang des Rechners zur Ansteuerung eines Radnabenantriebes zugeordnet ist.

11. Verteiler-bzw. Zustellerwagen nach einem der Ansprüche 1 bis 10, **dadurch gekennzeichnet, daß** die Ein-und Ausgänge des Rechners der Steuereinheit mit als Steckanschlüsse ausgebildeten Schnittstellen versehen sind und die Handgriffe sowie die jeweils einen getriebelos integrierten Antriebsmotor aufweisenden angetriebenen Rollen vermittels Adapter an das Chassis des Wagens anbaubar sowie vermittels Steckverbindungen mit den Ein-bzw. Ausgängen des Rechners verbindbar sind.

12. Verteiler-bzw. Zustellerwagen nach einem der Ansprüche 1 bis 11, **dadurch gekennzeichnet, daß** die der Ansteuerung der Radnabenmotoren zugeordneten Ausgänge des Rechners jeweils vermittels einer Treiberstufe (55) und einer Endstufe (56) an eine durch einen Stecker gebildete Schnittstelle angeschlossen sind und daß ein Schalter zur Stillegung der Hilfskraftantriebseinrichtung des Wagens vorgesehen ist.

13. Verteiler-bzw. Zustellerwagen nach einem der Ansprüche 1 bis 12, **dadurch gekennzeichnet, daß** wenigstens einer der Handgriffe eines Wagens mit einer, insbesondere durch eine Leuchtdiode gebildeten, Ladezustandsanzeige (52) der Akkumulatoren des Wagens ausgestattet ist.

14. Verteiler-bzw. Zustellerwagen nach nach einem der Ansprüche 1 bis 3, **dadurch gekennzeichnet, daß** zumindest der vertikal gerichtete Griffsteg (43) jedes Handgriffes mit einer Ummantelung aus einem elastischen Material ausgestattet ist.

15. Verteiler-bzw. Zustellerwagen nach Anspruch 14, **dadurch gekennzeichnet, daß** ein aus einem rohrfö-rmigen Profilmaterial bestehender und insgesamt als etwa U- förmiger Schiebebügel ausgebildeter Griffbügel (18) vorgesehen ist, wobei die freien Enden der beiden Profilschenkel der U-Form im wesentlichen vertikal aufragend und starr an das Wagenchassis angeschlossen sind und der Profilgrund der U-Form einen zumindest zum Benutzer hin abgewinkelten Bügel bildet und daß an jedem der beiden Profilschenkel des Schiebebügels je ein Moment-oder Kraftmesser (33) angeordnet ist.

16. Verteiler-bzw. Zustellerwagen nach Anspruch 14 und 15, **dadurch gekennzeichnet,daß** die beiden Moment-oder Kraftmesser bezüglich des Profilmaterials des Schiebebügels innenliegend angeordnet und als jeweils in einer Ebene wirkende, ausschließlich in Wagenlängsrichtung gerichtete Kräfte erfassende Sensoren ausgebildet sind.

17. Verteiler-bzw. Zustellerwagen nach einem der Ansprüche 14 bis 16, **dadurch gekennzeichnet,daß** jeder der beiden Moment-oder Kraftmesser jeweils einem der beiden Elektromotoren der Antriebsachse und zwar jeweils dem an der gleichen Wagenseite angeordneten Elektromotor zugeordnet ist.

18. Verteiler-bzw. Zustellerwagen nach einem der Ansprüche 14 bis 17, **dadurch gekennzeichnet, daß** die Sensoren als Moment-messer (13) ausgebildet und im Bereich der Fußteile der Profilschenkel des Schiebebügels angeordnet sowie zur Erzeugung eines das angreifende Moment wiederspiegelnden Steuerstromes zur Ansteuerung der Steuereinrichtung für die Energiezufuhr für den jeweils zugehörigen bzw. gleichseitig angeordneten Elektromotor ausgebildet sind.

19. Verteiler-bzw. Zustellerwagen nach einem der Ansprüche 14 bis 18, **dadurch gekennzeichnet, daß** die Sensoren als Kraftmesser (33) ausgebildet und im Bereich des Bügels des Schiebebügels angeordnet sowie zur Erzeugung eines die angreifende Kraft wiederspiegelnden Steuerstromes zur Ansteuerung der Steuereinrichtung für die Energiezufuhr für den jeweils zugehörigen bzw. gleichseitig angeordneten Elektromotor ausgebildet sind.

## Claims

1. A distribution or delivery trolley, consisting of a trolley chassis (66), which is made from frame uprights and crossbeams and is supported against the ground via at least one steering roller (6) which can swivel around a vertical axis and two fixed rollers (4), and an upwardly extending handlebar (18) connected to said chassis, wherein with each of the two rollers of a pair of fixed (4) or steering (6) rollers is associated a gearless integrated electric motor (11), which starts running under load and can reverse its direction of rotation, and wherein the energy supply of the electric motors (11) is controlled via a control mechanism (10), which comprises at least one dynamometer (13, 33, 38 to 41), which detects the pulling or thrust force or steering force exerted on the trolley and converts it into a control signal, and a control mechanism (10) for the energy supply of the electric motors (11) in proportion to the thrust or pulling force exerted in each case on the trolley,
**characterised in that** control unit (42) controlling the energy supply of the electric motors (11) is formed by a freely programmable electronic control unit, with each of the dynamometers (13, 33, 38 to 41) being associated with its own input (45, 46) and each of the two electric motors (11) being associated with its own output (48, 49) of the computer (47).

2. A distribution or delivery trolley according to Claim 1,
**characterised in that** the control unit (42) controlling energy supply of the electric motors comprises an electronic computer (47) and a freely programmable memory.

3. A distribution or delivery trolley according to Claim 1 or 2,
**characterised in that** the freely programmable memory (53) of the control unit (42) contains the criteria for the additional connection or power supply of the electric motors, such as power to be applied by the operator, adaptation to varying operating conditions and the like, as a function of the application.

4. A distribution or delivery trolley according to Claim 1 or 2,
**characterised in that** the freely programmable memory (53) can be programmed by means of an external device which can be connected to the computer (47) via a special input formed by an interface.

5. A distribution or delivery trolley according to one or more of Claims 1 to 4,
**characterised in that** the freely programmable control unit (42) can be connected as an exchangeable add-on part by means of an interface to the computer unit (47) and is formed by every type of data carrier which can be mounted the computer (47) or can be inserted into the computer (47).

6. A distribution or delivery trolley according to Claim 5,
**characterised in that** the handlebar (18) of the trolley is constructed as a shaft and is equipped with only one handle
and **in that** the handle is equipped with a pair of dynamometers (33) which record the thrust and pulling forces exerted on the shaft in the longitudinal direction of the trolley and with a pair of dynamometers (33) which record the steering forces exerted on the shaft in the transverse direction of the trolley and converts them into control signals.

7. A distribution or delivery trolley according to Claim 5 and 6,
**characterised in that** the dynamometers are made by strips of a foil material which varies its electric resistance as a function of a pressure force applied overall over its horizontal projection area and both in the longitudinal direction of the trolley and in the transverse direction of the trolley are disposed opposite each other on a vertically orientated web, which has a square profile cross section, of the handle connected to the shaft.

8. A distribution or delivery trolley according to one or more of Claims 1 to 3,
**characterised in that** the trolley is equipped with two rear fixed rollers (11) equipped with a gearless integrated wheel hub motor and at least one front roller (7) and the control unit is housed in the handle connected to the shaft and communicates with the wheel hub motors of the fixed rollers only via control lines equipped with connection plugs (60).

9. A distribution or delivery trolley according to Claim 8,
**characterised in that** the handlebar of the trolley is equipped with two handles spaced from each other in the transverse direction of the trolley, wherein disposed in each of the two handles are two dynamometers that are disposed opposite each other with respect to a thrust bearing, only detect pressure and thrust forces exerted on the trolley, and made in particular by strips of a foil material, which alters its electrical resistance proportionally to a pressure force applied overall over its entire surface.

10. A distribution or delivery trolley according to one of Claims 1 to 9,
**characterised in that** each of the dynamometers made of two foil strips integrated into a handle is associated with its own input (45, 46) of the computer of the control unit
and **in that** in each case one output of the computer is associated with each of the two dynamometers to control a wheel hub drive.

11. A distribution or delivery trolley according to one of Claims 1 to 10,
**characterised in that** the inputs and outputs of the computer of the control unit are provided with interfaces constructed as plug-in connections and the handles and also the driven rollers in each case comprising a gearless integrated driving motor can be mounted by means of adapters on the chassis of the trolley and also can be connected by means of plug-in connections to the inputs and outputs of the computer.

12. A distribution or delivery trolley according to one of Claims 1 to 11,
**characterised in that** the outputs of the computer that are associated with the drive of the wheel hub motors are in each case connected to an interface formed by a plug by means of a driver stage (55) and a final stage (56)
and **in that** a switch is provided to shut down the auxiliary power drive mechanism of the trolley.

13. A distribution or delivery trolley according to one of Claims 1 to 12,
**characterised in that** at least one of the handles of a trolley is equipped with a charging state display (52) of the accumulators of the trolley which is formed by a light-emitting diode.

14. A distribution or delivery trolley according to one of Claims 1 to 3,
**characterised in that** at least the vertically directed web (43) of each handle is equipped with a casing made from an elastic material.

15. A distribution or delivery trolley according to Claim 14, **characterised in that** a handlebar (18) made from a tubular sectional material and constructed overall as a roughly U-shaped pushing bar is provided, with the free ends of the two sectional limbs of the U shape extending substantially vertically and being rigidly connected to the trolley chassis and the sectional base of the U shape forming a bar bent at least towards the user
and **in that** a torquemeter (13) or dynamometer (33) is disposed at each of the two sectional limbs of the pushing bar.

16. A distribution or delivery trolley according to Claim 14 and 15,
**characterised in that** the two torquemeters or dynamometers are disposed internally with respect to the sectional material of the pushing bar and are constructed as sensors which act in one plane in each case and record forces directed exclusively in the longitudinal direction of the trolley.

17. A distribution or delivery trolley according to one of Claims 14 to 16,
**characterised in that** each of the two torquemeters or dynamometers is associated in each case with one of the two electric motors of the driving axle, precisely the electric motor which is disposed on the same side of the trolley.

18. A distribution or delivery trolley according to one of Claims 14 to 17,
**characterised in that** the sensors are constructed as torquemeters (13) and are disposed in the region of the base parts of the sectional limbs of the pushing bar and are also constructed to generate a control current reflecting the torque being applied in order to control the control mechanism for the energy supply for the associated electric motor or the electric motor disposed on the same side.

19. A distribution or delivery trolley according to one of Claims 14 to 18,
**characterised in that** the sensors are constructed as dynamometers (33) and are disposed in the region of the bar of the pushing bar and also are constructed to generate a control current reflecting the force being applied in order to control the control mechanism for the energy supply for the associated electric motor or the electric motor disposed on the same side.

## Revendications

1. Véhicule de transport et de distribution qui se compose d'un châssis (66) constitué de longerons et de traverses et s'appuyant sur le sol par au moins une roue de guidage (6) mobile autour d'un axe vertical et deux roues non orientables (4), et, d'un étrier de préhension (18), étant observé que chacune des roues regroupées par paires - roues non orientables (4) ou roues de guidage (6) - coopère avec un moteur électrique (11) intégré à entraînement direct, démarrant sous charge, à sens de rotation inversable, et que l'alimentation en énergie des moteurs électriques (11) est contrôlée par un dispositif de commande qui comprend au moins un dynamomètre (13, 33, 38 à 41) reconnaissant la force de traction ou de poussée, respectivement la force de guidage exercée sur le véhicule, pour la transformer en un signal de commande, et, une unité de commande et de réglage de l'alimentation en énergie des moteurs électriques (11) en fonction de la force de traction ou de poussée exercée sur le véhicule, **caractérisé en ce que** l'unité de commande et de réglage (42) contrôlant l'alimentation en énergie des moteurs électriques (11) est constituée d'une unité de commande et de réglage électronique librement programmable et que à chaque dynamomètre (13, 33, 38 à 41) est associée une entrée spécifique (45, 46) de l'ordinateur (47) et à chacun des deux moteurs électriques (11) est associée une sortie spécifique (48, 49) dudit ordinateur (47).

2. Véhicule de transport et de distribution selon la revendication 1 **caractérisé en ce que** l'unité de commande et de réglage (42) contrôlant l'alimentation en énergie du moteur électrique comprend un ordinateur (47) et une mémoire librement programmable.

3. Véhicule de transport et de distribution selon les revendications 1 et 2 **caractérisé en ce que** la mémoire (53) librement programmable de l'unité de commande et de réglage (42) inclut les critères permettant la connexion, respectivement l'alimentation en énergie des moteurs électriques, tels que la force à exercer par l'opérateur, l'adaptation à des conditions d'exploitation variables en fonction du cas particulier d'utilisation.

4. Véhicule de transport et de distribution selon les revendications 1 et 2 **caractérisé en ce que** la mémoire (53) librement programmable est programmée à partir d'un dispositif externe pouvant être connecté à l'ordinateur (47) par une entrée spécifique constituée d'une interface.

5. Véhicule de transport et de distribution selon l'une ou plusieurs des revendications 1 à 4 **caractérisé en ce que** l'unité de commande et de réglage (42) librement programmable est conçue comme pièce ajoutée échangeable, constituée d'un support de données quelconque pouvant être enfichée sur ou dans l'ordinateur (47), et peut être connectée à l'ordinateur par une interface.

6. Véhicule de transport et de distribution selon la revendication 5 **caractérisé en ce que** l'étrier de préhension (18) du véhicule est constitué d'un timon pourvu d'une seule poignée qui est équipée d'une paire de dynamomètres (33) saisissant les forces de poussée et de traction exercées sur le timon longitudinalement par rapport au véhicule et transformant lesdites forces en signaux de commande, et, d'une paire de dynamomètres saisissant les forces de guidage exercée sur le timon transversalement par rapport au véhicule et transformant lesdites forces en signaux de commande.

7. Véhicule de transport et de distribution selon les revendications 5 et 6 **caractérisé en ce que** les dynamomètres sont constitués de bandelettes de film dont la résistance électrique varie en fonction de la force de pression exercée sur toute leur surface de base et qui son disposées, tant longitudinalement que transversalement par rapport au véhicule, en se faisant face, sur une baguette verticale (43) de section transversale carrée de la poignée reliée au timon.

8. Véhicule de transport et de distribution selon l'une ou plusieurs revendications 1 à 3 **caractérisé en ce que** le véhicule comporte deux roues arrière non orientables (11) équipées d'un moteur au moyeu de roue intégré, à entraînement direct, et au moins une roue avant et que l'unité de commande et de réglage qui est logée dans la poignée reliée au timon est reliée aux moteurs au moyeu de roue des roues non orientables uniquement par des lignes pilotes pourvues de fiches de connexion (60).

9. Véhicule de transport et de distribution selon la revendication 8 **caractérisé en ce que** l'étrier de préhension du véhicule est pourvu de deux poignées disposées à une certaine distance l'une de l'autre en direction transversale et que dans chaque poignée sont logés deux dynamomètres disposés en se faisant face par rapport à une butée, saisissant uniquement les forces de poussée et de traction exercées sur le véhicule, constituée de bandelettes de film dont la résistance électrique varie proportionnellement à la force de pression exercée sur toute leur surface de base.

10. Véhicule de transport et de distribution selon l'une des revendications 1 à 9 **caractérisé en ce que** à chacun des dynamomètres logés dans les poignées, constitués d'une bandelette de film, est associée une entrée séparée (45, 46) de l'ordinateur de l'unité de commande et de réglage, et, une sortie dudit ordinateur en vue de la commande du moteur au moyeu de roue.

11. Véhicule de transport et de distribution selon l'une des revendications 1 à 10 **caractérisé en ce que** les entrées et sorties de l'ordinateur de l'unité de commande et de réglage sont pourvues d'interfaces conçues comme connexions à fiches et que les poignées ainsi que les roues motrices comprenant un moteur intégré à entraînement direct peuvent être montées sur le châssis du véhicule au moyen d'adaptateurs et reliées aux entrées et sorties de l'ordinateur par des connexions à fiches.

12. Véhicule de transport et de distribution selon l'une des revendications 1 à 11 **caractérisé en ce que** les sorties d'ordinateur associées à la commande des moteurs au moyeu de roue sont connectées par l'intermédiaire d'un étage directeur (driver) (55) et d'un étage final (56) à une interface, constituée par une fiche, et que il est prévu un commutateur permettant l'arrêt des dispositifs de commande des forces auxiliaires d'entraînement du véhicule.

13. Véhicule de transport et de distribution selon l'une des revendications 1 à 12 **caractérisé en ce que** au moins une des poignées du véhicule est équipée d'un indicateur (52) de l'état de chargement des accumulateurs du véhicule, constitué plus particulièrement d'une diode lumineuse.

14. Véhicule de transport et de distribution selon l'une des revendications 1 à 3 **caractérisé en ce que** au moins la baguette verticale (43) de chaque poignée est pourvue d'une enveloppe en matériau élastique.

15. Véhicule de transport et de distribution selon la revendication 14 **caractérisé en ce que** il est prévu un étrier de préhension (18) constitué d'un profilé tubulaire sensiblement en forme de U et formant un étrier pour pousser, que les extrémités libres des deux branches du profilé en forme de U qui se dressent à peu près verticalement sont montées de manière fixe sur le châssis du véhicule, le fond du profil en U formant un étrier coudé en direction de l'utilisateur et que sur chacune des deux branches de profilé de l'étier pour pousser est disposé un instrument de mesure du couple (13) ou un dynamomètre (33).

16. Véhicule de transport et de distribution selon les revendications 14 et 15 **caractérisé en ce que** les deux instruments de mesure du couple ou dynamomètres sont logés à l'intérieur du profilé constituant l'étrier pour pousser et sont constitués de palpeurs saisissant exclusivement des forces dirigées longitudinalement au véhicule.

17. Véhicule de transport et de distribution selon l'une des revendications 14 à 16 **caractérisé en ce que** chacun des instruments de mesure du couple ou des dynamomètres est associé à l'un des deux moteurs électriques de l'essieu, plus particulièrement au moteur électrique disposé du même côté du véhicule.

18. Véhicule de transport et de distribution selon l'une des revendications 14 à 17 **caractérisé en ce que** les palpeurs qui constituent les instruments de mesure du couple (13) sont disposés dans la zone des pieds des branches de profilé de l'étrier pour pousser et sont conçus en vue de la production d'un courant de commande reflétant le moment se produisant, destiné au dispositif de commande de l'alimentation en énergie du moteur électrique correspondant, c'est-à-dire situé du même côté du véhicule.

19. Véhicule de transport et de distribution selon l'une des revendications 14 à 18 **caractérisé en ce que** les palpeurs sont constitués de dynamomètres (33) qui sont disposés dans la zone de la traverse de l'étrier pour pousser et qui sont conçus en vue de la production du courant de commande, reflétant la force appliquée, destiné au dispositif de commande de l'alimentation en énergie du moteur électrique correspondant, c'est-à-dire situé du même côté du véhicule.
